# EUROPEAN PATENT APPLICATION

(11) **EP 1 970 357 A1**
(43) Date of publication of application: **17.09.2008**
(21) Application number: 08102612.2
(22) Date of filing: 14.03.2008
(51) Int. Cl.: C04B 35/495, C04B 41/50, C04B 41/87

(54) **Materials for coating ceramic bodies, preparation and use thereof and ceramic bodies comprising them**

(30) Priority: 14.03.2007 IT FI20070061
(71) Applicant: Colorobbia Italia S.p.a., 50053 Sovigliana Vinci (Firenze) (IT)
(72) Inventor: Montanari, Gabriele, 50025 Montespertoli (IT); Bitossi, Marco, 50056 Montelupo Fiorentino (IT)
(74) Representative: Gervasi, Gemma

(57) **Abstract**

There is described a series of materials applicable as surface coating films on double-fired, porous single-fired, single-fired ceramic objects, porcelain gres, sanitary fixtures and artistic ceramics.
These materials may appear in powder, suspension in a medium, granulated, atomized, sintered, pelletized form and others, under the most appropriate grain size conditions.

## Description

### Field of the invention

The invention relates to ceramic materials intended for use as coating films for ceramic artefacts produced with double-fired, monoporous single-fired, single-fired technologies, porcelain gres, sanitary fixtures and artistic ceramics.

### Prior art

It is know that in the ceramic industry vitrifiable compositions are particularly important because, according to the formulation and the application, they diversify the finished ceramic artefact with respect to the raw product composed of the support or mixture alone. This diversification allows to add to the raw artefact both aesthetic value, by means of color, different light reflection, etc., and technical value, by decreasing soilability, increasing resistance to chemical elements and to abrasion. These compositions vitrify in virtue of the presence in the formulation of pre-constituted glasses (frits) or of raw materials such that by melting together at the firing temperature of the artefact they form a vitreous matrix in which crystalline compounds may or may not be dispersed. Also non entirely vitrified ceramic compositions sinter and thus obtain compactness by means of binding vitreous phases. Specifically, some metal oxides (titanium, zinc, wolfram, molybdenum oxides) are known to induce crystallization in vitrifiable compositions under certain heat conditions.

An exception to the above are metal alloys in powder form, atomized, and others which applied on a ceramic body melt at the appropriate temperature creating a coating in which no vitreous phase can exist (Cf. for example patent application PCT/EP2006/063509).

A further exception are the noble metal-based ceramic coatings used for third- or four-firing on previously fired ceramic coatings.

All the aforesaid materials are applied using diversified techniques, such as disc application, bell application, dry application (during the step of pressing the support or subsequently), silkscreen printing, silicone roller technique and others.

The vitreous compositions may confer a shiny, matt, crystallized, shaded, colored, etc. appearance to the surface of the artefact.

Metal compositions (alloy powder-based) confer an indeed metal surface to the artefact which may be therefore oxidised, smoothed, polished, satinized, etc.

As apparent from the above, the range of materials available to the person skilled in the art for decorating and improving the technical properties of ceramic bodies is wide, however the continuous technological developments in this sector and specifically the market needs drive to make always new compositions capable of providing particular both technical and aesthetic features to the ceramic body.

### Detailed description of the invention

The present invention allows to respond to the aforesaid needs by making available to ceramists a new range of materials for coating ceramic bodies which have innovative features in aesthetic and technical terms, and specifically macro and micro crystallized metal surfaces, without introduced or induced vitreous phase, which combine the metal and the crystalline aesthetic appearance in the same context, making the result unique and distinguishable from the ceramic surfaces known to date.

According to the invention, ceramic bodies are intended as all artefacts formed by clay and other silica-based materials or not, such as for example feldspar, quartz, kaolin, etc., used for the production of double-fired, monoporous, single-fired ceramic objects, porcelain gres, sanitary fixtures and artistic ceramics and suitable for the application of coating materials such as those defined hereinafter, e.g. tiles, tableware, sanitary fixtures and decorative ceramics.

According to the invention, materials for coating ceramic bodies mean: enamels, ceramic paints, atomized, sintered, pelletized and granulated materials, enamels for screen printing or silicone roller application, enamels for dry application before, during and after pressing of the support, supplied dry and/or in a medium, in a wide range of grain sizes, suitable for all specific cases.

The materials for coating ceramic bodies according to the present invention comprise a mixture of oxides of the IB, VIB and VIII groups of the periodic table of elements.

Preferably, the oxides used for the purposes of the present invention are: wolfram oxide (also named tungsten oxide), cobalt oxide and copper oxide each of which in all stabile stages of oxidation.

In addition to the aforesaid oxides, the materials according to the present invention may also contain other oxides chosen from those commonly used for the production of coating materials for ceramic bodies as defined above, for example tin, zirconium, alumina oxide and all chromophore oxides (e.g.: chromium, manganese, iron oxide, etc.). Furthermore, the traditional ceramic stains may be used to modify the final color of the composition, while the glass reticulate formers (silica, boron, phosphorous and lead oxides) are either absent or present in such low percentages to not provide any particularity.

If required, the materials according to the present invention may also contain metal alloy powders which promote the melting and consolidate the metal appearance without however affecting the crystallization and without adding any extra technical and visual feature.

Because the specific weights of the three fundamental oxides in the invention are very high, in order to confer workability to the system and thus a good behaviour during the coating processes of the ceramic body with this type of formulations, it is preferable to add either organic products (glues, plasticizers, suspension agents, etc) or inorganic products (clay, bentonite, kaolin, etc.) or both in order to confer the suitable rheological features, such as for example plasticity and suspension capacity, in the various mixing media.

Preferably, according to the invention, the foregoing oxides are present in the following ranges indicated in weighed percentage calculated with respect to the total weight of the material:

| | |
|---|---|
| Wolfram oxide: | 20-70% |
| Cobalt oxide: | 2-30% |
| Copper oxide: | 5-30% |

and the other oxides and stains, if present, are preferably in an amount between 0 and 20%.

Preferably, the materials according to the invention have the following composition:

| | |
|---|---|
| Wolfram oxide: | 40 - 60% |
| Cobalt oxide: | 5 - 20% |

| | |
|---|---|
| Copper oxide: | 10 - 20% |
| Other oxides: | 0 - 20% |
| Stains: | 0 - 20% |

According to a particular embodiment of the invention, the materials have the following composition:

| | |
|---|---|
| Wolfram oxide: | 20 - 40% |
| Cobalt oxide: | 5 - 30% |
| Copper oxide: | 15 - 30% |

In this case, after firing, a result which is either prevalently or totally metal instead of mixed crystallized-metal is obtained.

Applied to the ceramics, the materials according to the present invention allow to create crystallized metal or metal compositions. Specifically, solid mixture alloys are obtained from oxides instead of metals and without the aid of inert and controlled atmospheres as in the case of the oxide alloys in metallurgy.

Furthermore, it is possible to adjust the dimension the of the crystals, above all in two manners:
a) by increasing the percentage of wolfram oxide; indeed, when the amount of wolfram oxide is less than 40% in the formula, micro-crystallization is either not visible or not clearly visible to naked eye, while for increasing amounts of wolfram oxide to the previously indicated maximum limit and respecting the other foregoing conditions, there is an increase in the length of the needle-like cobalt wolframate crystals.
b) by introducing increasing amounts of quartz or silica to a maximum of 15%, calculated on the rest of the composition by weight, in compositions which respect the foregoing parameters, it is noted that the size of the needle-like cobalt wolframate crystals increase in length.

For the purposes according to the invention, the above-motioned crystallized metal compositions may be either dry or wet applied on the surface of the ceramic body creating the required decoration by means of an appropriate mechanical system. The ceramic body will then be subjected to the usual drying and firing operations, at the temperatures and for the times and cycles normally required.

The aforesaid mixtures may be prepared by adding the three metal oxides to the other organic and inorganic materials in a dry mixer or other machine suited to the type of material to be mixed until homogenization; or by grinding them under wet conditions in traditional ball mills to obtain the desired grain size according to the application for which the product is intended. The mixture thus obtained in applied to the ceramic body and then this is subjected to firing at the normal temperatures and for the required times and cycles.

Specifically, cobalt wolframate crystals (CoWO4) are formed relating to a phase of Krasnoselskite ICSD code 15851. These needle-like crystals may reach and exceed the length of one millimeter with different but repeatable orientations, repeated on the entire enameled surface of the ceramic object. The cobalt wolframate crystals often have copper oxide crystal surface enrichments which are also present in the matrix surrounding the crystals.

If required, after firing, the ceramic artefact may be smoothed, lapped or polished using appropriate tools as already known in the prior art for products coated with traditional materials or even not. By operating according to the above manner, the metal effect is enhanced and the crystallized effect is decreased.

Unlike the metal coatings obtained by deposition of metals and alloys, the materials object of the present invention are not subjected to oxidation during the firing of the ceramic artefact. As a consequence, the final smoothing operation is not necessary and only optional.

Variations of color, texture and surface crystallization of the artefact are obtained by laying layers of materials for coating ceramic bodies known in the prior art under and over the materials object of the present invention, thus obtaining a diversification of the basic metal and crystalline effect and broading the range of possible final aesthetic results.

Furthermore, the use of materials according to the invention with silkscreen printing or silicone roller techniques allows to further diversify the aesthetic offer by applying the classical principles of ceramic decoration.

The examples shown hereinafter allow to better understand and appreciate the present invention.

### Example 1

Wolfram oxide, cobalt oxide, copper oxide, Zr-Pr yellow stain, fine plastic clay and CMC glue are mixed in an appropriate intensive mixer. The mixture is introduced into an Alsing type ball mill or turbo dissolver with a sufficient amount of water to reach a weight by liter not lower than 2000 grams/liter.

The composition of the aforesaid mixture is shown below:

| | |
|---|---|
| Fine white plastic clay | 4% |
| Wolfram oxide | 43% |
| Cobalt oxide | 15% |
| Black copper oxide | 20% |
| Zr-P stain | 18% |
| CMC glue | 0.3% |

The enamel is ground to obtain a residue of less than 1 gram in a 16,000 mesh sieve.

The prepared enamel is then bell applied on a raw porcelain gres tile, dried to zero humidity and then fired in a roller kiln at a temperature of 1200° C for a 60 minute cycle.

The visual result is a metal surface with a green hue and lighter color, brighter needle-like crystals uniformly distributed on the entire surface of the tile.

### Example 2

Wolfram oxide, cobalt oxide, copper oxide, Zr-Si-Fe pink stain, fine plastic clay and CMC glue are mixed in an appropriate intensive mixer. The mixture is introduced into an Alsing type ball mill or turbo dissolver with a sufficient amount of water to reach a weight by liter not lower than 1850 grams/liter.

The composition of the aforesaid mixture is shown below:

| | |
|---|---|
| Fine white plastic clay | 5% |
| Wolfram oxide | 50% |
| Cobalt oxide | 12% |
| Black copper oxide | 18% |
| Zr-P stain | 15% |
| CMC glue | 0.3% |

The enamel is ground to obtain a residue of less than 1 gram in a 16,000 mesh sieve. The enamel thus prepared is then wet sprayed with grain size of 0.05 - 0.60 mm and residual humidity of 6 - 7%.

This spray used for double loading on a porcelain gres support allows to obtain a brown-red color metallized metal surface after firing at 1200° C for approximately 60 minutes in a roller kiln.

### Example 3

Wolfram oxide, cobalt oxide, copper oxide and fine plastic clay are mixed in an approximate intensive mixer.

The composition of the aforesaid mixture is shown below:

| | |
|---|---|
| Fine white plastic clay | 5% |
| Wolfram oxide | 50% |
| Cobalt oxide | 25% |
| Black copper oxide | 25% |

The mixture is introduced into a rotary plate granulator along with a sufficient amount of water to form balls of variable diameter from 1 to 5 mm. These balls are then calcinated at a temperature of 900° C for 60 minutes in a rapid one-channel kiln. The balls are then crushed and sieved with vibrating sieves to obtain a 0,5 - 2,0 mm sized pellet. The pelletized material is dry applied on a raw engobed and enameled single-fired support with dry mat enamel and fired at the single-firing temperature and cycle, i.e. at 1170° C for 50 minutes. The result after firing is a tile with a dry mat surface stained with black crystallized metal enamel.

## Claims

1. Materials for coating ceramic bodies comprising a mixture of oxides of the IB, VIB and VIII groups of the periodic table of elements.

2. Materials according to claim 1 chosen from the group consisting of: enamels, ceramic paints, atomized, sintered, pelletized and granulated materials, enamels for screen printing or silicone roller application, enamels for dry application before, during and after pressing of the support, dry and/or in a medium, of any grain size.

3. Materials according to claims 1 and 2, wherein said oxides are wolfram oxide (also named tungsten oxide), cobalt oxide and copper oxide each of which in all stabile stages of oxidation.

4. Materials according to claim 3 further comprising oxides chosen from those commonly used for the production of ceramic body coating materials, stains, metal alloys, compounds capable of modifying the rheological properties of the material and possibly quartz or silica in an amount lower than 15% calculated on the rest of the composition by weight.

5. Materials according to claim 4 wherein said oxides are chosen from: tin oxide, zirconium oxide, chromophore oxides; the stains are traditional ceramic stains, and the compounds capable of modifying the rheological properties of the material are either organic products chosen from glues, plasticizers, suspension agents, or inorganic products chosen from clay, bentonite, kaolin, or both.

6. Materials according to claim 3, wherein said oxides are present in the following ranges indicated in weighed percentage calculated with respect to the total weight of the material:
| | |
|---|---|
| Wolfram oxide: | 20-70% |
| Cobalt oxide: | 2-30% |
| Copper oxide: | 5-30% |
and the other oxides and stains, if present, are preferably in an amount between 0 and 20%.

7. Materials according to claim 6 having the following composition:
| | |
|---|---|
| Wolfram oxide: | 40 - 60% |
| Cobalt oxide: | 5-20% |
| Copper oxide: | 10-20% |
| | |
|---|---|
| Other oxides: | 0-20% |
| Stains | 0 - 20% |

8. Materials according to claim 7 having the following composition:
| | |
|---|---|
| Wolfram oxide: | 20-40% |
| Cobalt oxide: | 5-30% |
| Copper oxide: | 15-30% |

9. Materials according to claims 5-8 having the following composition:
| | |
|---|---|
| a) Fine white plastic clay | 4% |
| Wolfram oxide | 43% |
| Cobalt oxide | 15% |
| Black copper oxide | 20% |
| Zr-P stain | 18% |
| CMC glue | 0.3% |
| b) Fine white plastic clay | 5% |
| Wolfram oxide | 50% |
| Cobalt oxide | 12% |
| Black copper oxide | 18% |
| Zr-P stain | 15% |
| CMC glue | 0.3% |
| c) Fine white plastic clay | 5% |
| Wolfram oxide | 50% |
| Cobalt oxide | 25% |
| Black copper oxide | 25% |

10. A process for the preparation of materials according to claims 1 - 9, wherein the three essential metal oxides and the other possibly desired oxides together with the other organic and inorganic materials are either treated in a dry mixer until homogenization; or are wet ground in traditional ball mills to obtain the desired grain size.

11. Ceramic bodies coated with materials according to claims 1 - 7 and 9.

12. Ceramic bodies according to claim 11 wherein the materials according to claims 1 - 7 and 9 are applied to the ceramic body and then this is fired at normal temperatures and for the required times and cycles, and the final product is possibly smoothed, lapped or polished according to known methods.

13. Ceramic bodies according to claim 12 comprising cobalt wolframate (CoWO4) crystals possibly with copper oxide crystal surface enrichments which are also present in the matrix surrounding the crystals.

14. Ceramic bodies coated with materials according to claim 8.

15. Ceramic bodies according to claim 14, wherein the materials according to claim 8 are applied to the ceramic body and then this is fired at normal temperatures and for the required times and cycles, and the final product is possibly smoothed, lapped or polished according to known methods.

16. Ceramic bodies according to claim 15 having a non-crystallized metal surface.

17. Ceramic bodies according to claims 11 - 16, wherein said ceramic bodies are: tiles, tableware, sanitary fixtures and decorative ceramics.

18. Ceramic bodies according to claim 17, wherein the materials according to claims 1 - 9 are laid under and/or over known materials for coating ceramic bodies.

19. Ceramic bodies according to claims 11 - 18, wherein the materials according to the claims 1 - 9 are applied to the ceramic body with screen printing or silicone roller techniques.
